# FASCICULE DE BREVET EUROPEEN

(11) **EP 0 891 005 B1**
(45) Date de publication et mention de la délivrance du brevet: **02.04.2003**
(21) Numéro de dépôt: 98401718.6
(22) Date de dépôt: 07.07.1998
(51) Int. Cl.: H01Q 21/22, H01Q 3/26, G01S 7/36

(54) **Antenne réseau antibrouillée**
Gruppenantenne mit Störungschutz
Array antenna with anti-jamming

(30) Priorité: 08.07.1997 FR 9708668
(43) Date de publication de la demande: 13.01.1999
(73) Titulaire: Thales, 75008 Paris (FR)
(72) Inventeur: Champeau, André, 94117 Arcueil Cedex (FR)
(74) Mandataire: Beylot, Jacques

(56) Documents cités:
- EP-A- 0 474 977
- EP-A- 0 651 461
- US-A- 4 291 310
- US-A- 4 596 986
- US-A- 5 343 211
- COMBAUD M: "Traitement d'antenne par sous-resaux" ONZI ME COLLOQUE SUR LE TRAITEMENT DU SIGNAL ET DES IMAGES, 1 - 6 juin 1987, pages 419-422, XP002058656 NICE
- FARINA A AND GIUSTO R: "Wide deterministic nulling by means of multiplicative array techniques" CONFERENCE PROCEEDINGS OF THE 11TH EUROPEAN MICROWAVE CONFERENCE, 7 - 11 septembre 1981, pages 805-812, XP002058657 AMSTERDAM, NETHERLANDS

## Description

La présente invention concerne une antenne pour ondes radioélectriques ou ultrasonores, de type réseau, antibrouillée en réception, avec des éléments rayonnants ou des groupes d'éléments rayonnants équipés individuellement de modules actifs ou passifs commandés en amplitude et en phase permettant un pointage, à l'émission comme à la réception, par formation analogique de faisceau et avec des moyens de formation adaptative de faisceau par le calcul réalisant l'antibrouillage de réception.

Dans la suite, les modules actifs ou passifs commandés en amplitude et en phase seront simplement appelés modules commandés dans un unique but de simplification.

Une antenne réseau est constituée d'un assemblage d'éléments rayonnants répartis en un réseau, la plupart du temps surfacique, selon un maillage d'environ la moitié λ/2 de la longueur d'onde du rayonnement émis ou reçu pour éviter l'apparition de lobes de réseau perturbant la directivité de l'antenne.

Le dimensionnement d'une antenne est fonction de l'amplitude du signal à recevoir c'est-à-dire du rapport signal à bruit désiré en réception et de la résolution angulaire souhaitée.

Dans la plupart des cas, les signaux à recevoir sont caractérisés par une densité surfacique de puissance uniforme au lieu de réception de sorte que la puissance du signal utile reçu croît comme la surface utile de l'antenne.

La résolution angulaire est, quant à elle, définie dans chaque direction par la dimension linéaire L de l'antenne dans la direction considérée rapportée à la longueur d'onde λ dans la relation λ/L, la résolution angulaire solide étant définie dans le rapport λ²/S où S est la surface de l'antenne.

Dans la pratique, l'exigence de finesse de résolution angulaire est plus difficile à satisfaire que celle d'un rapport signal/bruit élevé de sorte que l'on aboutit, si aucun compromis n'est accepté, à des éléments rayonnants en surnombre. Comme l'on cherche, pour des raisons de coût, à limiter le plus possible le nombre d'éléments rayonnants d'une antenne réseau, il est intéressant de lutter contre ce surnombre en laissant des vides dans le maillage des éléments rayonnants à la surface d'une antenne réseau. L'antenne réseau est alors dite lacunaire ou raréfiée selon que le nombre d'éléments rayonnants manquants est inférieur ou supérieur au nombre d'éléments rayonnants présents.

Dans une antenne réseau lacunaire ou raréfiée, l'absence de certains éléments rayonnants fait que le maillage à environ λ/2 n'est plus respecté ce qui conduit à l'apparition de lobes de réseau si la disposition des éléments rayonnants manquants est périodique ou de lobes diffus si cette disposition est aléatoire. Il importe de réduire le plus possible ces lobes de réseau et diffus.

Une antenne réseau peut être à pointage mécanique ou électronique. Lorsque le pointage est électronique, il se fait à l'émission par une formation analogique de faisceau alors qu'à la réception, il peut se faire soit par une formation analogique de faisceau, soit par une formation de faisceau par le calcul.

La formation analogique de faisceau nécessite d'équiper individuellement les éléments rayonnants de l'antenne ou des groupes d'éléments rayonnants avec des modules actifs ou passifs commandés en amplitude et en phase permettant d'orienter le plan des ondes émises ou reçues dans la direction voulue. Elle a l'avantage de fonctionner aussi bien à l'émission qu'à la réception. Eventuellement, une commande d'amplitude ou un réseau de distribution permettent une pondération en amplitude.

La formation de faisceau par le calcul consiste à numériser les signaux reçus par chacun des éléments rayonnants après qu'ils aient été démodulés de façon cohérente puis à les déphaser individuellement et à en faire une somme pondérée par calculateur pour orienter le plan des ondes reçues dans la direction voulue. Elle a l'avantage de donner une grande souplesse à la formation de faisceau puisqu'il est possible de former simultanément par le calcul plusieurs faisceaux pointant dans des directions différentes. Elle permet en outre, lorsqu'elle est adaptative, de faire de l'antibrouillage par ajustement de la position des zéros dans le diagramme rayonnement. Cependant, elle a le désavantage de ne pas être utilisable à l'émission, de nécessiter un équipement coûteux pour la numérisation des signaux des éléments rayonnants et de réclamer une quantité de calculs très importante.

Pour limiter le coût d'une formation de faisceau par le calcul on a pensé diviser le réseau de l'antenne en sous-réseaux et réaliser la formation de faisceau par le calcul sous forme réduite non pas sur les signaux individuels des éléments rayonnants mais sur les signaux délivrés individuellement par des regroupements en sous-réseaux des éléments rayonnants. Le maillage de l'antenne à environ λ/2 n'est plus respecté ce qui conduit à l'apparition de lobes de réseau et/ou de lobes diffus de sorte que la formation réduite de faisceau conduit à des performances médiocres de l'antenne sur un large champ angulaire. Elle reste cependant intéressante, sous sa forme adaptative, pour de l'antibrouillage angulaire ponctuel car celui-ci ne nécessite pas, pour être efficace, que la formation de faisceau porte sur un grand nombre de signaux de réception.

Compte tenu de ces considérations et du fait qu'une antenne réseau est souvent employée à la fois à l'émission et à la réception, il est usuel d'équiper les éléments rayonnants d'une antenne réseau individuellement ou par groupe, de modules commandés permettant un pointage par formation de faisceau analogique et de regrouper en réception les éléments rayonnants de l'antenne en sous-réseaux pour effectuer un antibrouillage par une formation adaptative réduite de faisceau par le calcul, le regroupement en réception des éléments rayonnants s'effectuant en sous-réseaux surfaciques et la formation adaptative réduite de faisceau par le calcul s'effectuant dans les deux directions de pointage, gisement et site.

La formation adaptative réduite de faisceau par le calcul engendre un diagramme de rayonnement dont le lobe principal conserve la direction de pointage produite par les modules commandés mais dont les zéros sont déplacés en direction des brouilleurs, cela en jouant principalement sur les amplitudes relatives et éventuellement, au second ordre, sur les déphasages relatifs imposés aux signaux de réception des sous-réseaux. L'énergie totale étant conservée, ce diagramme de rayonnement garde l'inconvénient de présenter des lobes de réseau à des positions angulaires discrètes ou des lobes diffus selon que l'organisation des sous-réseaux surfaciques dans l'antenne est périodique ou aléatoire car les sous-réseaux ont nécessairement des centres de phase espacés d'une distance supérieure ou égale à λ traduisant un sous-échantillonnage de la surface de l'antenne.

Pour limiter cet inconvénient, il a été proposé, dans la demande de brevet français FR-2.712.121 déposée par la demanderesse, d'effectuer sur une antenne réseau, un pointage par formation analogique de faisceau complété par un antibrouillage en réception au moyen de deux formations réduites de faisceau par le calcul appliquées aux signaux de réception des éléments rayonnants équipés de modules commandés, regroupés en deux ensembles de sous-réseaux linéaires parallèles orientés selon deux directions différentes et au moyen d'une combinaison non linéaire des deux signaux de réception résultant des deux formations réduites de faisceau par le calcul. Cette manière de faire entraîne une réduction des perturbations entrant par les lobes secondaires et particulièrement par les lobes de réseau dans le cas d'une antenne lacunaire. Cependant, le traitement non linéaire de regroupement des signaux de réception résultant des deux formations réduites de faisceau par le calcul peut engendrer des produits d'intermodulation si plusieurs signaux sont présents dans la même case distance d'une même cellule angulaire : une cible et un fouillis par exemple. Cet inconvénient peut être contourné par un filtrage Doppler en amont du regroupement des deux signaux de réception résultant des formations réduites de faisceau par le calcul mais cela signifie qu'il faut doubler les équipements de filtrage Doppler.

La présente invention a pour but une antenne réseau à pointage par formation de faisceau analogique et à antibrouillage en réception au moyen de formations réduites adaptatives de faisceau par le calcul entraînant un bas niveau de lobes secondaires ou de lobes diffus, que cette antenne réseau soit pleine, lacunaire ou raréfiée.

Elle a pour objet une antenne réseau antibrouillée en réception, pourvue d'éléments rayonnants équipés individuellement ou par groupes de modules actifs ou passifs commandés en amplitude et en phase permettant un pointage à l'émission comme à la réception, par formation analogique de faisceau, et d'un circuit d'antibrouillage en réception comportant :
- des premiers moyens de formation adaptative réduite de faisceau par le calcul opérant sur des signaux de réception issus des modules commandés, et regroupés d'une première manière en sous-réseaux linéaires parallèles à une première direction, déterminant des corrections à imposer aux signaux de réception provenant des différents sous-réseaux linéaires pris en compte pour éliminer des brouilleurs et appliquant ces corrections aux modules commandés; et
- des deuxièmes moyens de formation adaptative réduite de faisceau par le calcul opérant sur des signaux de réception issus des modules commandés, et regroupés d'une deuxième manière en sous-réseaux linéaires parallèles à une deuxième direction, déterminant des corrections à imposer aux signaux de réception provenant des différents sous-réseaux pris en compte pour éliminer des brouilleurs, imposant ces corrections aux signaux de réception provenant des différents sous-réseaux pris en compte avant de les sommer pour former une voie de réception pour l'antenne globale.

On réalise ainsi l'antibrouillage en réception d'une antenne réseau à pointage électronique par formation analogique de faisceau au moyen de deux formations adaptatives réduites de faisceau par le calcul successives entraînant pour l'antenne une charge de traitement réduite par rapport à celle d'une formation adaptative complète de faisceau par le calcul partant des signaux de réception délivrés individuellement par les modules commandés raccordés aux éléments rayonnants de l'antenne tout en offrant une réduction comparable des perturbations entrant par les lobes secondaires et lobes de réseau.

Avantageusement, les directions des deux ensembles de sous-réseaux linéaires sont orthogonales et orientées l'une selon le plan site et l'autre selon le plan gisement de l'antenne réseau.

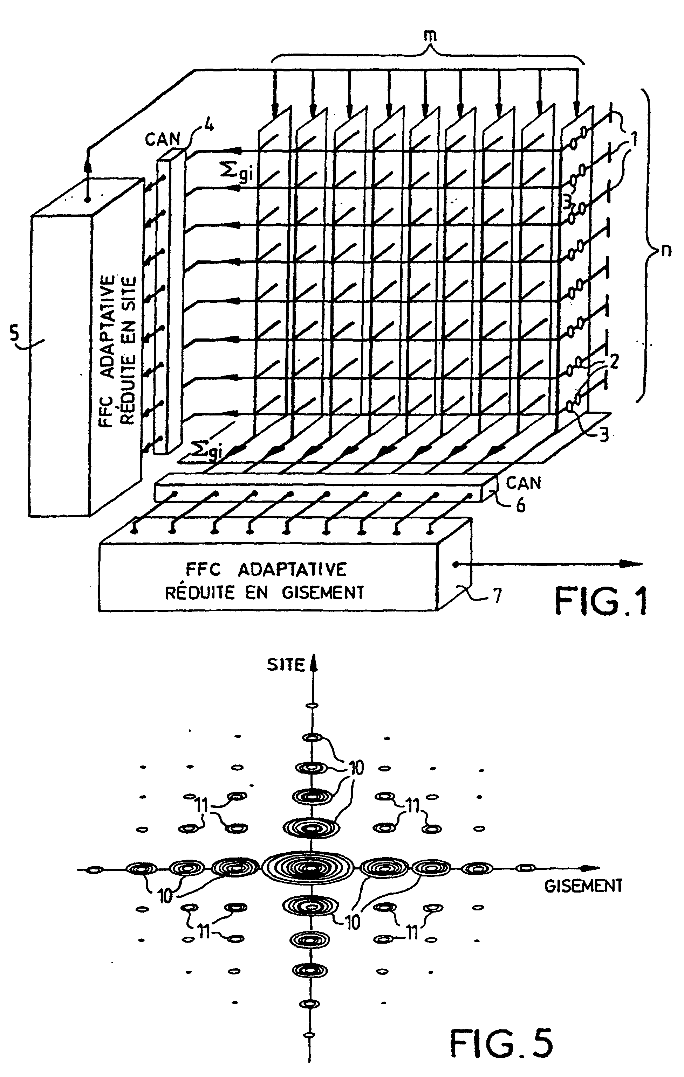

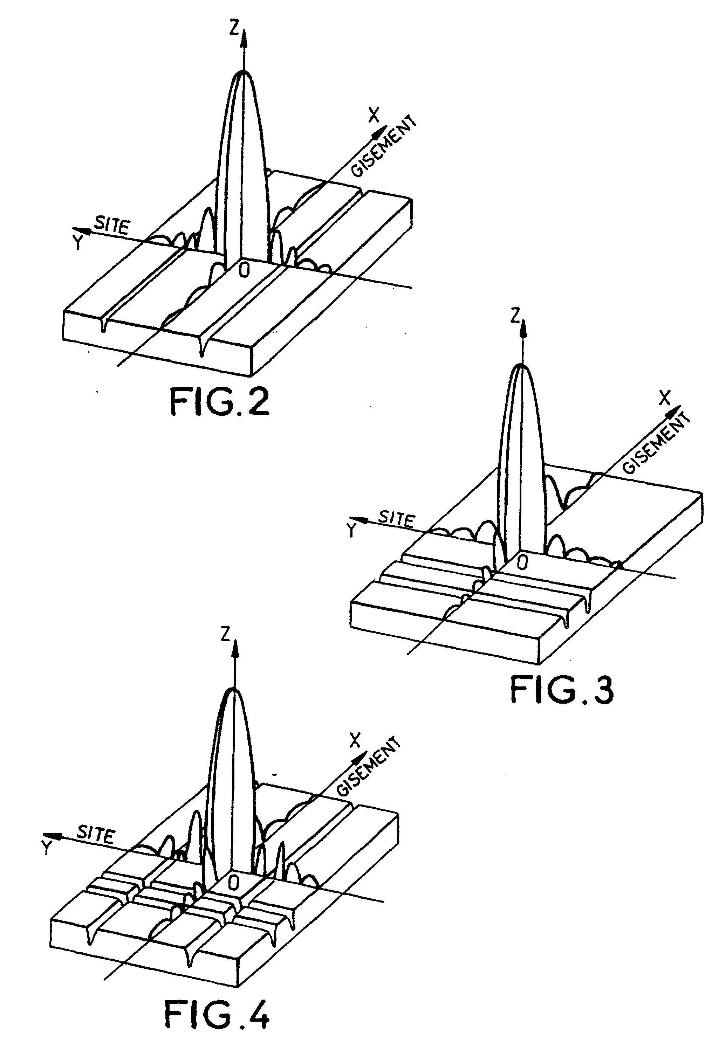

D'autres caractéristiques et avantages de l'invention ressortiront de la description ci-après d'un mode de réalisation donné à titre d'exemple. Cette description sera faite en regard du dessin dans lequel :
- une figure 1 représente, de manière schématique, une antenne réseau antibrouillée selon l'invention,
- une figure 2 représente l'effet, sur le diagramme de rayonnement en réception d'une l'antenne réseau, du circuit de formation adaptative réduite de faisceau en site utilisé dans l'antenne réseau antibrouillée de la figure 1,
- une figure 3 représente l'effet, sur le diagramme de rayonnement en réception d'une antenne réseau, du circuit de formation adaptative réduite de faisceau en gisement utilisé dans l'antenne réseau antibrouillée de la figure 1,
- une figure 4 représente les effets combinés, sur le diagramme de rayonnement en réception d'une antenne réseau, des deux circuits de formation adaptative réduite de faisceau en site et gisement utilisés dans l'antenne réseau antibrouillée de la figure 1, et
- une figure 5 est un diagramme illustrant le positionnement, dans le plan site-gisement, des lobes latéraux du diagramme de rayonnement d'une antenne réseau par rapport au lobe principal.

La figure 1 montre une antenne réseau plan rassemblant un ensemble d'éléments rayonnants 1 uniformément répartis sur m colonnes et n lignes selon un maillage d'environ λ/2 (λ étant la longueur d'onde d'utilisation de l'antenne) pour répondre au critère d'échantillonnage de surface garantissant l'absence de lobes de réseau dans le cas d'un balayage électronique sur un grand angle. Chaque élément rayonnant 1 est équipé individuellement d'un module déphaseur commandé 2 complété par un module atténuateur commandés 3.

Il est possible, dans le soucis de simplifier la configuration de l'antenne, de faire desservir plusieurs éléments rayonnants de l'antenne par un même module commandé 2.

Les modules commandés 2, 3 sont commandés, au premier ordre, par un circuit de pointage d'antenne non représenté qui oriente, aussi bien à l'émission qu'à la réception, le plan d'onde de l'antenne dans la direction voulue en gisement et en site, en jouant essentiellement sur les phases et accessoirement sur les niveaux des signaux des différents éléments rayonnants pour modeler la forme du ou des lobes.

En réception, les sorties des modules commandés 2, 3 font l'objet de deux regroupements : un premier regroupement en n alignements horizontaux de m éléments parallèles à l'axe gisement et un deuxième regroupement en m alignements verticaux de n éléments parallèles à l'axe site. Ces deux regroupements sont obtenus au moyen de deux ensembles croisés et superposés de distributeurs. Ces derniers partagent le signal de réception disponible en sortie d'un module commandé 2, 3 en une première et une- deuxième composantes disponibles en parallèle et regroupent d'une part, la première composante avec les premières composantes issues des autres modules commandés 2, 3 appartenant au même alignement horizontal pour former un signal de réception Σ_{gi}, et d'autre part, la deuxième composante avec les deuxièmes composantes issues des autres modules commandés appartenant au même alignement vertical pour former un signal de réception Σₛᵢ. Les signaux de réception Σ_{gi} de l'ensemble des alignements horizontaux d'éléments rayonnants 1 sont appliqués par l'intermédiaire d'un banc 4 de convertisseurs analogique-numérique à un premier circuit 5 de formation adaptative réduite de faisceau par le calcul élaborant des commandes de correction à destination des modules commandés 2, 3 s'ajoutant, au deuxième ordre, aux commandes élaborées par le circuit de pointage. Les signaux de réception Σₛᵢ de l'ensemble des alignements verticaux d'éléments rayonnants 1 sont appliqués par l'intermédiaire d'un autre banc 6 de convertisseurs analogique-numérique à un deuxième circuit 7 de formation adaptative réduite de faisceau par le calcul formant une voie de réception de l'antenne globale.

Le premier circuit 5 de formation adaptative réduite de faisceau par le calcul analyse les perturbations en site du plan d'onde reçu par l'antenne réseau et en déduit les corrections à apporter aux commandes élaborées par le circuit de pointage à destination des divers modules commandés 2, 3 pour atténuer les perturbations détectées. Il permet de créer, dans le diagramme de rayonnement en réception de l'antenne réseau, des crevasses en site ayant la forme de vallées horizontales pour éliminer les signaux perturbateurs décalés en site par rapport à l'axe de pointage de l'antenne.

Le deuxième circuit 7 de formation adaptative réduite de faisceau par le calcul analyse les perturbations en gisement du plan d'onde reçu par l'antenne réseau et en déduit les corrections d'amplitude et de phase à apporter aux signaux de réception des alignements verticaux d'éléments rayonnants 1 pour atténuer les perturbations détectées avant de sommer ces signaux de réception pour engendrer un signal global de réception de l'antenne réseau. Il permet de créer, dans le diagramme de rayonnement de l'antenne réseau en réception, des crevasses en gisement ayant la forme de vallées verticales pour éliminer les signaux perturbateurs décalés en gisement par rapport à l'axe de pointage de l'antenne réseau.

Les premier et deuxième circuits 5 et 7 de formation adaptative réduite de faisceau par le calcul ne seront pas détaillés ici car ils ressortent de la technique habituelle d'antibrouillage au moyen d'une formation adaptative de faisceau par le calcul basée sur la recherche des corrections des niveaux et, au deuxième ordre, des phases des signaux de réception mis à contribution permettant de minimiser la puissance du signal global de réception, conformément à l'hypothèse selon laquelle les signaux perturbateurs que l'on cherche à éliminer ont une puissance en général supérieure à celle du signal utile et proviennent d'une direction au moins un peu différente de celle de pointage de l'antenne réseau.

Les figures 2, 3 et 4 montrent, tracées dans un trièdre de référence direct dont l'axe OX est gradué en angle de gisement, l'axe OY en angle de site et l'axe OZ en niveau de signal, les coupes dans les plan XOZ et YOZ des surfaces de diagramme de rayonnement de l'antenne réseau obtenues pour un fonctionnement en réception, respectivement, dans le cas de la mise en oeuvre du seul premier circuit 5 de formation adaptative réduite de faisceau en site, dans le cas de la mise en oeuvre du seul deuxième circuit 7 de formation adaptative réduite de faisceau en gisement et dans le cas de la mise en oeuvre combinée des premier et deuxième circuits 5 et 7 de formation réduite adaptative de faisceau en site et gisement.

La figure 2 représente le diagramme de rayonnement obtenu pour l'antenne réseau fonctionnant en réception avec le seul premier circuit 5 de formation adaptative réduite de faisceau par le calcul opérant sur les signaux de réception des alignements horizontaux d'éléments rayonnants 1 équipés de modules commandés 2, 3. Il comporte un lobe principal fin orienté dans la direction de pointage déterminée par les réglages au premier ordre des modules commandés 2, 3 imposés par le circuit de pointage, et des lobes secondaires. Les lobes secondaires ont des amplitudes plus faibles dans le plan gisement XOZ car la formation réduite de faisceau est à base d'alignements horizontaux pleins et des amplitudes plus marquées dans le plan site YOZ mais avec des zéros intercalaires ayant la forme de vallées parallèles à l'axe gisement et des positions en site ajustables par l'action adaptative de la formation réduite de faisceau.

La figure 3 représente le diagramme de rayonnement obtenu pour l'antenne réseau fonctionnant en réception avec le seul deuxième circuit 7 de formation réduite adaptative de faisceau par le calcul délivrant le signal global de réception de l'antenne réseau. Il comporte un lobe principal fin orienté dans la direction de pointage déterminée par les réglages au premier ordre des modules commandés 2, 3 imposés par le circuit de pointage, et des lobes secondaires. Les lobes secondaires ont des amplitudes plus faibles dans le plan site YOZ car la formation réduite de faisceau est à base d'alignements verticaux pleins et des amplitudes plus marquées dans le plan gisement XOZ mais avec des zéros intercalaires ayant la forme de vallées parallèles à l'axe site et des positions en gisement ajustables par l'action adaptative de la formation réduite de faisceau.

La figure 4 représente le diagramme de rayonnement obtenu pour l'antenne réseau fonctionnant en réception à la suite de la combinaison des actions des deux circuits 5 et 7 de formation adaptative réduite de faisceau. Les actions adaptatives des deux formations de faisceau successives, l'une dans le plan site et l'autre dans le plan gisement se traduisent par la création de crevasses en forme de vallées les unes parallèles à l'axe gisement, les autres parallèles à l'axe site, chaque crevasse ne consommant qu'un degré de liberté dans une seule formation adaptative réduite de faisceau.

On remarque que l'utilisation successive, pour de l'antibrouillage en réception, de deux formations adaptatives réduites de faisceau par le calcul portant sur deux regroupements en alignements orthogonaux des éléments rayonnants de l'antenne, l'une agissant en amont sur les modules commandés des éléments rayonnants et l'autre fournissant en aval un signal global de réception de l'antenne réseau permet d'aboutir, du point de vue des lobes secondaires, à un résultat proche de celui d'une formation adaptative complète de faisceau par le calcul, tout en ménageant un nombre suffisant de degrés de liberté (m-1)+(n-1) pour l'élimination des brouilleurs et en réclamant des capacités de traitement bien plus faibles puisque les formations réduites adaptatives de faisceau par le calcul ne portent plus que sur m+n points au lieu de m x n points.

Le fait que les zéros ou crevasses créés par les deux traitements de formation adaptative réduite de faisceau par le calcul soient en forme de vallée et non de puits est un avantage si l'on considère la forme du diagramme d'ambiguïté d'une antenne à illumination séparée en site et gisement. En effet, comme représenté à la figure 5, les lobes secondaires sont constitués, par amplitudes décroissantes, de lobes latéraux 10 qui se répartissent autour du lobe principal, dans des alignements selon les axes principaux site et gisement, et de lobes latéraux de latéraux 11 qui sont répartis en échiquier. Comme, à l'exception du lobe principal, c'est sur les lobes latéraux que les perturbations éventuelles sont le plus ressenties, des zéros adaptatifs en forme de vallée sont particulièrement adaptés à des dispositions en alignements des lobes secondaires.

La mise en oeuvre des corrections en amplitude et phase élaborées par le premier circuit de formation réduite adaptative de faisceau par le calcul s'effectuant par des actions sur les modules commandés des éléments rayonnants, un certain laps de temps, très court, est nécessaire pour changer les états des modules commandés. Le temps de calcul des corrections ne s'ajoute pas à ce laps de temps mais, contrairement à une formation réduite adaptative de faisceau classique, le traitement ne peut pas s'appliquer à des signaux provisoirement mémorisés, sans interruption du flux de signaux incidents. Il faut donc accepter une neutralisation d'intervalles de temps de réception pour rafraîchir, quand cela s'impose, les réglages des modules commandés. Pour éviter des périodes de neutralisation périodiques et systématiques, on peut utiliser la fonction d'analyse du premier traitement de formation adaptative réduite de faisceau par le calcul pour surveiller les perturbations et leurs évolutions, et n'interrompre la réception que lorsqu'il se révèle nécessaire de modifier, de manière significative, les réglages des modules commandés. Avec la rapidité des moyens de calcul actuellement disponibles et celle de la micro-électronique hyperfréquence des modules d'antennes actives, il est possible de limiter à une case distance l'interruption de la réception pour la mise à jour des corrections. Dans le cas d'une antenne réseau pour radar à impulsions, il est possible de minimiser les incidences de cette contrainte, en situant les rafraîchissements des corrections sur les réglages des modules commandés en début de récurrence.

On remarque qu'il est possible de dupliquer une ou plusieurs fois le deuxième circuit 7 de formation adaptative réduite de faisceau par le calcul de manière à disposer, à partir de la même antenne, de plusieurs voies de réception pointant dans des directions différentes en gisement. Chaque exemplaire du deuxième circuit 7 de formation adaptative réduite de faisceau par le calcul est alors affecté, au premier ordre, d'un jeu particulier de coefficients complexes de pondération adapté à la direction de pointage en gisement recherchée.

On a décrit une antenne réseau mettant en oeuvre, pour l'antibrouillage, de manière successive, deux formations adaptatives réduites de faisceau par le calcul, une première hybride agissant en amont sur les réglages des modules commandés des éléments rayonnants de l'antenne et opérant à partir d'un regroupement des éléments rayonnants de l'antenne par alignements horizontaux, et une deuxième purement numérique délivrant en aval un signal global de réception de l'antenne réseau et opérant à partir d'un regroupement des éléments rayonnants de l'antenne par alignements verticaux. On pourrait tout aussi bien faire opérer la première formation adaptative réduite de faisceau de nature hybride à partir d'un regroupement des éléments rayonnants de l'antenne par alignements verticaux et la deuxième formation adaptative réduite de faisceau de nature purement numérique à partir d'un regroupement des éléments rayonnants de l'antenne par alignements horizontaux. Il faut cependant remarquer que la première version est préférable en pratique. En effet, les perturbations par brouillage intentionnel ou fortuit ont, très généralement, une stationnarité plus longue en site qu'en gisement. Il est donc préférable de situer sur l'axe de site le premier traitement hybride de formation adaptative réduite de faisceau qui nécessite de très brèves interruptions de la réception pour les modifications des réglages des modules commandés car alors ces interruptions seront encore moins fréquentes.

Les corrections adaptatives appliquées sur les modules commandés ne peuvent correspondre qu'à une seule solution pour un seul lobe formé. Celles appliquées en numérique peuvent être des solutions parallèles appliquées à des lobes multiples. Il en découle, pour une solution à lobes multiples en parallèles, que ceux-ci ne pourront être formés que dans le plan où la formation de faisceau adaptative est entièrement numérique.

L'antenne réseau qui vient d'être décrite est une antenne réseau pleine. Elle pourrait bien évidemment, être lacunaire ou raréfiée Dans ce cas, en l'absence de perturbations, les deux formations adaptatives réduites de faisceau par le calcul faites successivement laissent en l'état les éventuels lobes de réseau ou diffus dus à la lacunarité ou à la raréfaction tandis qu'en présence de perturbations, les crevasses ou zéros adaptatifs créés sont ceux d'une formation adaptative de faisceau par calcul dans l'environnement de diffus ou de latéraux de l'antenne telle qu'elle est.

Une application typique de l'antenne réseau antibrouillée en réception qui vient d'être décrite est celle d'une antenne réseau pour un radar 3D (site, gisement, distance). Pour un lobe principal du diagramme de rayonnement ayant une ouverture de 2° en site et 1,5° en gisement l'antenne réseau doit comporter approximativement 80 colonnes de 54 éléments rayonnants soit un totale de l'ordre de 4.320 éléments rayonnants. Avec une telle antenne réseau, le traitement d'antibrouillage en réception est assuré successivement, par la première formation adaptative réduite de faisceau hybride agissant sur les commandes des modules commandés des éléments rayonnants, qui a 54 moments en site, et par la deuxième formation adaptative réduite de faisceau purement numérique délivrant un signal global de réception, qui a 80 moments en gisement. Le nombre de degrés de liberté étant de (54-1)+(80-1) l'antibrouillage de réception est en principe capable d'affronter 132 brouilleurs ce qui assure une importante marge opérationnelle. On remarque en outre que l'on fait une grande économie de traitement par rapport à une formation adaptative complète de faisceau par le calcul puisque les deux formations adaptatives réduites de faisceau ne portent que sur 54 et 80 points au lieu de 4.320.

## Revendications

1. Antenne réseau antibrouillée en réception, pourvue d'éléments rayonnants (1) équipés individuellement ou par groupes de modules passifs ou actifs commandés en amplitude et en phase (2) permettant un pointage à l'émission comme à la réception, par formation analogique de faisceau, et d'un circuit d'antibrouillage en réception **caractérisée en ce que** ledit circuit d'antibrouillage comporte :
- des premiers moyens (5) de formation adaptative réduite de faisceau par le calcul opérant sur des signaux de réception issus desdits modules commandés (2), et regroupés d'une première manière en sous-réseaux linéaires parallèles à une première direction, déterminant des corrections à imposer aux signaux de réception provenant des différents sous-réseaux linéaires pris en compte pour éliminer des brouilleurs et appliquant ces corrections auxdits modules commandés (2), et
- des deuxièmes moyens (7) de formation adaptative réduite de faisceau par le calcul opérant sur des signaux de réception issus desdits modules commandés (2), et regroupés d'une deuxième manière en sous-réseaux linéaires parallèles à une deuxième direction, déterminant des corrections à imposer aux signaux de réception provenant des différents sous-réseaux pris en compte pour éliminer des brouilleurs, imposant ces corrections aux signaux de réception provenant des différents sous-réseaux pris en compte avant de les sommer pour former une voie de réception pour l'antenne globale.

2. Antenne selon la revendication 1, **caractérisée en ce que** lesdits deuxièmes moyens de formation adaptative réduite de faisceau par le calcul sont dupliqués au moins une fois et affectés, à chaque duplication, de jeux de coefficients complexes de pondération différents de manière à former plusieurs voies de réception pointant dans des directions différentes.

3. Antenne selon la revendication 1, **caractérisée en ce que** les directions des sous-réseaux linéaires des deux regroupements de signaux de réception sur lesquels opèrent les premiers et deuxièmes moyens de formation adaptative réduite de faisceau par le calcul sont orthogonales entre elles.

4. Antenne selon la revendication 3, **caractérisée en ce que** la direction des sous-réseaux linéaires de l'un des regroupements est horizontale tandis que celle des sous-réseaux linéaires de l'autre regroupement est verticale.

5. Antenne selon la revendication 4 **caractérisée en ce que** la direction des sous-réseaux linéaires du regroupement de signaux de réception sur lequel opèrent les premiers moyens de formation adaptative réduite de faisceau est horizontale, celle des sous-réseaux linéaires du regroupement de signaux de réception sur lequel opèrent les deuxième moyens de formation adaptative réduite de faisceau étant verticale.

6. Antenne selon la revendication 1, **caractérisée en ce qu'**elle est lacunaire, son réseau d'éléments rayonnants comportant des vides et les éléments rayonnants manquants étant inférieurs en nombre aux éléments rayonnants présents.

7. Antenne selon la revendication 1, **caractérisée en ce qu'**elle est raréfiée, son réseau d'éléments rayonnants comportant des vides et les éléments rayonnants manquants étant supérieurs en nombre aux éléments rayonnants présents.

## Claims

1. Array antenna with antijamming in reception, provided with radiating elements (1) equipped individually or in groups with amplitude- and phase-controlled passive or active modules (2) allowing pointing both on transmission and on reception, by analogue beamforming, and with a circuit for antijamming in reception; **characterized in that** the said antijamming circuit comprises:
- first means (5) of reduced adaptive beamforming by computation operating on reception signals emanating from the said controlled modules (2), and grouped together in a first manner into linear subarrays parallel to a first direction, determining corrections to be imposed on the reception signals originating from the various linear subarrays taken into account so as to eliminate jammers and applying these corrections to the said controlled modules (2) and,
- second means (7) of reduced adaptive beamforming by computation operating on reception signals emanating from the said controlled modules (2), and grouped together in a second manner into linear subarrays parallel to a second direction, determining corrections to be imposed on the reception signals originating from the various subarrays taken into account so as to eliminate jammers, imposing these corrections on the reception signals originating from the various subarrays taken into account before summing them to form a reception channel for the overall antenna.

2. Antenna according to Claim 1, **characterized in that** the said second means of reduced adaptive beamforming by computation are duplicated at least once and assigned, on each duplication, different sets of complex weighting coefficients so as to form several reception channels pointing in different directions.

3. Antenna according to Claim 1, **characterized in that** the directions of the linear subarrays of the two groupings of reception signals on which the first and second means of reduced adaptive beamforming by computation operate are mutually orthogonal.

4. Antenna according to Claim 3, **characterized in that** the direction of the linear subarrays of one of the groupings is horizontal while that of the linear subarrays of the other grouping is vertical.

5. Antenna according to Claim 4, **characterized in that** the direction of the linear subarrays of the reception signals grouping on which the first means of reduced adaptive beamforming operate is horizontal, that of the linear subarrays of the reception signals grouping on which the second means of reduced adaptive beamforming operate being vertical.

6. Antenna according to Claim 1, **characterized in that** it is gappy, its array of radiating elements comprising voids and the missing radiating elements being fewer in number than the radiating elements present.

7. Antenna according to Claim 1, **characterized in that** it is sparse, its array of radiating elements comprising voids and the missing radiating elements being greater in number than the radiating elements present.

## Patentansprüche

1. Netzantenne mit Störsignalunterdrückung beim Empfang, die Strahlerelemente (1), welche einzeln oder in Gruppen mit passiven oder aktiven amplituden- und phasengesteuerten Moduln (2) versehen sind und eine Peilung in Sende- wie Empfangsrichtung durch analoge Strahlbildung ermöglichen, sowie eine Schaltung zur Störsignalunterdrükung beim Empfang besitzt,
**dadurch gekennzeichnet, daß** die Schaltung zur Störsignalunterdrückung aufweist:
- erste Mittel (5) zur anpassungsfähigen und beschränkten Strahlbildung mittels Berechnung, die auf von den gesteuerten Moduln (2) kommende Empfangssignale einwirken und gemäß einer ersten Art in lineare und zu einer ersten Richtung parallele Unternetze zusammengefaßt sind und Korrekturen bestimmen, denen die von den verschiedenen zu berücksichtigenden linearen Unternetze kommenden Empfangssignale unterworfen werden, um Störquellen zu beseitigen, wobei diese Korrekturen auf die gesteuerten Moduln (2) angewendet werden,
- und zweite Mittel (7) zur anpassungsfähigen und beschränkten Strahlbildung mittels Berechnung, die auf von den gesteuerten Moduln (2) kommende Empfangssignale einwirken und gemäß einer zweiten Art in lineare und zu einer zweiten Richtung parallele Unternetze zusammengefaßt sind und Korrekturen bestimmen, denen die von den verschiedenen zu berücksichtigenden linearen Unternetzen kommenden Empfangssignale unterworfen werden, um Störquellen zu beseitigen, wobei diese Korrekturen auf die von den verschiedenen berücksichtigten Unternetzen kommenden Empfangssignale angewendet werden, ehe diese Signale zur Bildung eines Empfangskanals für die globale Antenne summiert werden.

2. Antenne nach Anspruch 1, **dadurch gekennzeichnet, daß** die zweiten Mittel zur anpassungsfähigen und beschränkten Strahlbildung mittels Berechnung mindestens einmal doppelt vorgesehen sind und bei jeder Verdopplung unterschiedliche Sätze von komplexen Wichtungskoeffizienten verwenden, sodaß mehrere Empfangskanäle gebildet werden, die in unterschiedliche Peilrichtungen zeigen.

3. Antenne nach Anspruch 1, **dadurch gekennzeichnet, daß** die Richtungen der linearen Unternetze der beiden Zusammenfassungen von Empfangssignalen, auf die die ersten und zweiten Mittel zur anpassungsfähigen und beschränkten Strahlbildung mittels Berechnung einwirken, zueinander orthogonal verlaufen.

4. Antenne nach Anspruch 3, **dadurch gekennzeichnet, daß** die Richtung der linearen Unternetze der einen Art horizontal und die der linearen Unternetze der anderen Art vertikal ist.

5. Antenne nach Anspruch 4, **dadurch gekennzeichnet, daß** die Richtung der linearen Unternetze derjenigen Art, auf die die ersten Mittel zur anpassungsfähigen und beschränkten Strahlbildung einwirken, horizontal ist, während die Richtung der linearen Unternetze derjenigen Art, auf die die zweiten Mittel zur anpassungsfähigen und beschränkten Strahlbildung einwirken, vertikal ist.

6. Antenne nach Anspruch 1, **dadurch gekennzeichnet, daß** sie lückenhaft ist, wobei ihr Netz von Strahlerelementen Leerstellen aufweist und die Anzahl von fehlenden Strahlerelementen geringer als die der vorhandenen Strahlerelemente ist.

7. Antenne nach Anspruch 1, **dadurch gekennzeichnet, daß** sie verarmt ist, wobei ihr Netz von Strahlerelementen Leerstellen aufweist und die Anzahl von fehlenden Strahlerelementen größer als die der vorhandenen Strahlerelemente ist.
